(19) Europäisches Patentamt
European Patent Office
Office européen des brevets

(11) **EP 2 497 228 B1**

(12) **FASCICULE DE BREVET EUROPEEN**

(45) Date de publication et mention de la délivrance du brevet:
**21.03.2018 Bulletin 2018/12**

(51) Int Cl.:
***H04L 12/28*** *(2006.01)*

(21) Numéro de dépôt: **10747284.7**

(22) Date de dépôt: **22.07.2010**

(86) Numéro de dépôt international:
**PCT/IB2010/053345**

(87) Numéro de publication internationale:
**WO 2011/055240 (12.05.2011 Gazette 2011/19)**

(54) **COMMUNICATION D'ORDRES DANS UN RESEAU DOMOTIQUE ET ENTRE RESEAUX DOMOTIQUES**

AUFTRÄGEKOMMUNIKATION IN EINEM HAUSNETZ UND ZWISCHEN HAUSNETZEN

ORDERS COMMUNICATION IN A HOME NETWORK AND BETWEEN HOME NETWORKS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **06.11.2009 FR 0957889**

(43) Date de publication de la demande:
**12.09.2012 Bulletin 2012/37**

(73) Titulaire: **SOMFY ACTIVITES SA**
**74300 Cluses (FR)**

(72) Inventeur: **MIGNOT, Pierre**
**F-05380 Châteauroux Les Alpes (FR)**

(74) Mandataire: **Rossi, Alexandra et al**
**Bugnion SA**
**10, route de Florissant**
**1206 Genève (CH)**

(56) Documents cités:
**WO-A2-01/78307     US-A1- 2005 271 072**

**Description**

L'invention concerne un procédé de communication d'informations et de commandes sur un réseau domotique. L'invention concerne également les dispositifs permettant ou utilisant le procédé de communication et une installation munie de tels dispositifs.

Une installation domotique comprend au moins deux équipements dans un bâtiment, qui peuvent communiquer entre eux par des signaux de type radiofréquences ou courants porteurs. Ces équipements peuvent être des contrôleurs, des automatismes de commande, des organes de commande munis d'interface homme-machine, des capteurs de présence, capteurs météorologiques, de qualité de l'air etc., des actionneurs raccordés à des équipements mobiles ou fixes tels que des portes ou portails, volets d'aération, protections solaires, radiateurs de chauffage, climatiseurs, sirènes d'alarme, etc. Les équipements peuvent également comprendre des appareils domestiques de l'habitat (par exemple électroménager ou Hi-Fi).

Une telle installation est décrite dans la publication WO01/78307.

A l'installation domotique est associé un réseau domotique et un protocole de communication, définissant selon un modèle normalisé en plusieurs couches les modalités physiques et logiques de transmission de l'information dans l'installation domotique.

Au niveau le plus élevé, les équipements sont généralement définis par des profils, explicitant l'ensemble des commandes ou informations issues de l'équipement ou reconnues par celui-ci.

Chaque équipement est identifié par un code d'identification, également appelé adresse de l'équipement dans l'installation.

De nombreux protocoles de communication ont été développés dans ce domaine mais sont incompatibles les uns avec les autres, même lorsqu'ils opèrent sur des fréquences de communication identiques, notamment du fait de structures différentes des trames (bas-niveau) mais aussi des sémantiques (haut-niveau) utilisées dans les couches applicatives. De plus, au sein d'un même protocole, la structure de la trame bas-niveau est décorrélée du message (l'instruction) tel qu'exprimé en langage de programmation. Il s'ensuit une complexité qui pèse dans les temps de développement et dans les risques d'erreur.

Il est connu d'adapter la longueur de trame et/ou son contenu à la nature d'une instruction contenue dans la trame, selon plusieurs formats. Ce type d'adaptation est comparable par exemple à la codification des instructions d'un microprocesseur en langage assembleur : le nombre d'octets de l'instruction dépend de la nature de l'instruction (exécutable sans paramètre, exécutable avec un paramètre, avec deux paramètres...), du mode d'adressage utilisé (sans adresse, adressage relatif, adressage étendu...) etc.

Le brevet US 7,304,950 décrit une structure de trame variable selon la nature de l'opération codée dans la trame. Par exemple, un code opération 001 décrit une opération d'écriture, utilisant un champ étendu, avec test de redondance cyclique (CRC) et accusé de réception. Un code opération 010 décrit la même opération mais sans champ étendu, sans CRC et sans accusé de réception. Il n'y a pas de lien logique dans le codage entre le code de l'opération et le code de présence de CRC ou d'accusé de réception.

Il est connu de la demande de brevet FR 2 939 555 d'utiliser une interface graphique utilisateur et des icônes pour faciliter la programmation d'équipements domotiques, par exemple à l'aide d'un écran tactile. A une icône peut être associée une fenêtre texte permettant d'identifier complètement un équipement à partir de l'icône et de sa fenêtre texte. Des icônes de type complexe peuvent représenter non seulement un équipement mais aussi l'état de cet équipement, modifiable à l'aide de boutons dans une fenêtre de commande. Ce document n'incite pas à un procédé de communication particulier.

L'invention permet de remédier à ces divers inconvénients en proposant un niveau d'abstraction plus important que celui des protocoles actuels, et donc apte à les fédérer dans un langage commun ou à faciliter la communication dans des passerelles entre protocoles, facilement compréhensible par l'homme, notamment le programmeur, tout en étant beaucoup plus proche de la machine. La mise en oeuvre de l'invention nécessite un codage particulier de segments fonctionnels constitutifs de la trame.

L'invention prend donc tout son sens dans le cadre d'une première programmation d'une installation domotique, en simplifiant la tâche de l'installateur. Elle est également applicable très avantageusement au sein d'une ou de plusieurs installations domotiques, dans la ou lesquelles elle offre une simplification de l'interfaçage avec l'utilisateur et une passerelle entre les installations domotiques.

Dans le procédé de communication dans un réseau domotique selon l'invention permettant la communication entre acteurs constitués par des émetteurs d'ordres et/ou récepteurs d'ordres associés à des équipements dans un bâtiment au moyen de trames, une trame comprend une succession de segments fonctionnels, chaque segment fonctionnel comprenant un champ de type de segment.

Selon l'invention, le champ de type de segment peut indiquer que le segment fonctionnel comprend l'un des éléments suivants :

- une adresse d'un acteur,
- une désignation d'un paramètre
- une valeur de paramètre,
- un type d'échange,
- un type d'action.

Selon l'invention, une trame peut comprendre plusieurs segments fonctionnels spécifiant un type d'action. Selon l'invention, une trame peut comprendre plus que deux segments fonctionnels identifiant des acteurs.

Selon l'invention, un type d'action peut désigner au moins l'une des actions ou opérations suivantes :

- une affectation ou une contrainte,
- une interrogation,
- une condition logique, basée notamment sur une valeur mesurée d'un paramètre mesurable par un capteur.

Selon l'invention, la trame peut comprendre un segment fonctionnel spécifiant un type d'échange, le type d'échange indiquant au moins le sens de l'échange entre acteurs et/ou une demande d'acquittement et/ou une réponse à une demande d'acquittement.

Selon l'invention, chaque segment fonctionnel peut comprendre un champ de longueur de segment permettant de déduire le nombre d'octets contenus dans le segment fonctionnel, à l'exception de segments fonctionnels particuliers dont la longueur est prédéterminée et pouvant spécifier un type d'action ou un type d'échange.

Selon l'invention, chaque segment fonctionnel peut comprendre un champ de longueur de segment permettant de déduire le nombre d'octets contenus dans le segment fonctionnel.

Selon l'invention, le procédé de communication peut comprendre une étape de construction de la trame à partir d'une instruction écrite dans un langage de programmation de type textuel ou de type iconique, dans laquelle :

- chaque identifiant d'acteur,
- chaque identifiant de paramètre, désignant notamment une position ou une vitesse de mouvement d'un équipement,
- chaque type d'action,
- chaque valeur de paramètre,

donne naissance à un segment fonctionnel distinct de la trame.

Selon l'invention, dans le cas d'un langage de programmation de type textuel, un segment fonctionnel particulier peut être formé à partir d'une chaîne de caractères ne comprenant que des signes.

Selon l'invention, un même signe peut présenter une signification différente s'il spécifie un type d'échange ou s'il spécifie un type d'action.

Selon l'invention, un type d'action peut désigner une action d'ajout et/ou une action de retrait d'acteurs à un groupe d'acteurs.

Selon l'invention, un type d'action peut désigner une action d'ajout de nouveaux segments fonctionnels à la trame.

Selon l'invention, le dispositif de traduction pour la programmation d'une installation domotique, ladite installation comprenant des émetteurs d'ordres et/ou des récepteurs d'ordres associés à des équipements dans un bâtiment, lesdits émetteurs d'ordres et/ou récepteurs d'ordres communiquant entre eux par l'intermédiaire de trames comprenant plusieurs segments fonctionnels, comprend des moyens pour traduire en une trame une instruction écrite dans un langage de programmation, l'instruction comprenant des mots composés de chaînes de caractères alphanumériques et/ou signes et/ou icônes, la structure de ladite trame traduite correspondant à celle de l'instruction et comportant autant de segments fonctionnels que l'instruction comporte de mots et chaque segment fonctionnel comprenant un champ de type de segment.

Selon l'invention, le dispositif domotique de type émetteur d'ordres et/ou récepteur d'ordres et/ou outil de programmation d'une installation domotique, comprend des moyens matériels et logiciels et des moyens de communication aptes à émettre et à recevoir des trames, lesdites trames comprenant une pluralité de segments fonctionnels, et les moyens matériels et logiciels comprennent une mémoire de trame permettant de stocker une trame, une première table, un comparateur, apte à reconnaître dans ledit champ de données un code de type de segment, lesdits codes de type de segment étant stockés dans la première table, et à déduire de ce code de type de segment le type de chaque segment fonctionnel, afin de mettre en oeuvre le procédé de communication tel que décrit ci-dessus.

Selon l'invention, l'installation domotique comprend au moins un dispositif de traduction tel que décrit ci-dessus ou au moins un dispositif domotique tel que décrit ci-dessus.

L'invention sera mieux comprise par l'homme du métier grâce à la description détaillée de différents modes d'exécution en relation avec les dessins accompagnants, dans lesquels :

La figure 1 représente une installation domotique comprenant plusieurs dispositifs domotiques utilisant le procédé de communication de l'invention pour communiquer.

La figure 2 représente schématiquement un dispositif de traduction selon l'invention.

La figure 3 représente, selon l'invention, la structure d'une trame de communication et/ou d'une instruction dans le langage de programmation.

La figure 4 représente deux types d'échanges, distingués dans l'invention.

La figure 5 représente différents signes utilisés dans le langage de programmation et leur signification.

La figure 6 représente un premier exemple de trame et/ou d'instruction.

La figure 7 représente un deuxième exemple de trame et/ou d'instruction.

La figure 8 représente trois exemples de trames et/ou d'instructions relatifs à une même séquence.

La figure 9 représente un sixième exemple de trame et/ou d'instruction.

La figure 10 représente un septième exemple de trame et/ou d'instruction.

La figure 11 représente une séquence de trames et/ou d'instructions relatives à un procédé de détection de vent.

La figure 12 représente le codage binaire d'une trame émise sur le réseau domotique.

La figure 13 représente un dispositif domotique muni de moyens aptes à appliquer le procédé de communication selon l'invention.

La figure 14 représente un réseau d'installation comprenant un dispositif domotique muni de moyens aptes à appliquer le procédé de communication selon l'invention.

Les figures 15A et 15B représentent schématiquement deux exemples d'application de l'invention au modèle de communication OSI en 7 couches.

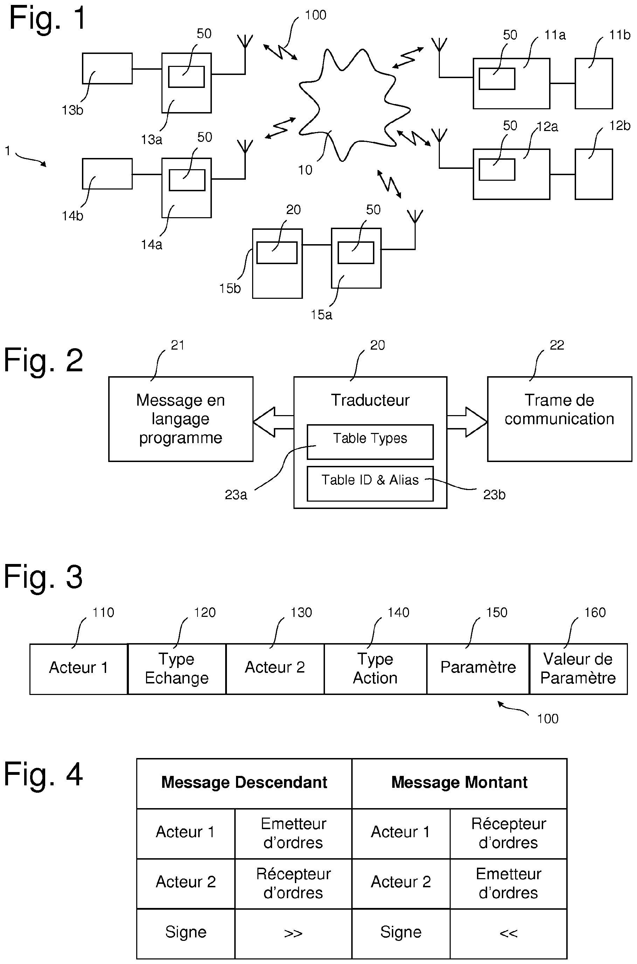

La figure 1 représente une installation domotique 1 comprenant plusieurs dispositifs domotiques communiquant à l'aide d'un réseau domotique 10.

Ces dispositifs domotiques consistent en des émetteurs d'ordres ou des récepteurs d'ordres, associés à des équipements d'un bâtiment ou utilisés pour le pilotage de tels équipements.

Ainsi, un premier récepteur d'ordres 11a est raccordé à un premier équipement 11b, par exemple un actionneur d'écran mobile tel un volet roulant ou une protection solaire.

Un deuxième récepteur d'ordres 12a est raccordé à un deuxième équipement 12b, par exemple un actionneur d'éclairage, de chauffage ou de climatisation.

Un premier émetteur d'ordres 13a est raccordé à un troisième équipement 13b, par exemple un contrôleur comprenant un clavier de commande et un écran d'affichage contenu dans un boîtier de commande à distance, formant ainsi une télécommande. Un deuxième émetteur d'ordres 14a est raccordé à un quatrième équipement 14b, par exemple un capteur de température intérieure ou extérieure, un capteur de présence, un capteur d'ensoleillement ou un capteur de vent.

Un troisième émetteur d'ordres 15a est raccordé à un outil de programmation 15b, destiné à communiquer avec les différents équipements du réseau. Cet outil de programmation peut par exemple être, comme le troisième équipement, un contrôleur évolué, mais il peut également être constitué par un ordinateur (PDA, PC, etc.).

Les émetteurs d'ordres et/ou les récepteurs d'ordres communiquent entre eux à l'aide d'un réseau domotique 10 utilisant par exemple un support physique de type hertzien (radiofréquences) comme représenté sur la figure par le symbole d'antennes, ou de type filaire direct, ou encore de type courants porteurs de ligne (PLC). Le réseau domotique peut également combiner les différents types de support physique dans le cas d'un réseau hétérogène.

Les messages (ou « télégrammes ») sont transmis sous forme de signaux comprenant des trames 100 émises ou reçues. Le réseau domotique selon l'invention utilise un protocole de communication, spécifiant, notamment, le processus de transformation des trames en signaux transmis sur le réseau domotique.

La communication entre éléments est bidirectionnelle. Le terme « émetteur d'ordres » ou « récepteur d'ordres » désigne par convention le sens principal de communication de commandes ou de données entre les différents dispositifs. Alternativement, certains dispositifs sont unidirectionnels, comme des télécommandes locales, de portée réduite. Un dispositif associé à un capteur est assimilé à un émetteur d'ordres. Un tel dispositif peut n'émettre que des informations. Emetteurs d'ordres et récepteurs d'ordres sont des « acteurs » dans le procédé de communication. Chaque acteur est identifié par un identifiant qui lui est propre, par exemple une adresse dans le réseau domotique.

Chaque équipement muni d'une interface homme-machine (même simple ou guidée : clavier, écran) peut permettre la traduction d'une action humaine en un ordre de commande ou de programmation d'un équipement associé. Cette traduction implique une transformation de l'information en entrée (appui sur une touche du clavier, choix dans un menu d'écran) en une trame de commande ou de programmation compréhensible par l'équipement associé, selon le protocole de communication partagé.

En revanche, les étapes de programmation de l'installation sont généralement plus fastidieuses et nécessitent souvent du temps et/ou une bonne connaissance par l'installateur du fonctionnement des éléments de l'installation à programmer.

La figure 2 représente schématiquement un dispositif de traduction 20 selon l'invention. Un tel dispositif de traduction peut être intégré au niveau d'une télécommande ou d'un outil de programmation que possède un installateur. Il peut également faire partie d'un boîtier-relais, ou passerelle, assurant la communication entre deux installations domotiques distinctes. Ce dispositif de traduction permet la traduction d'une instruction ou d'un message, depuis un langage de programmation utilisé par un programmeur humain, en une trame de communication apte à assurer le fonctionnement des dispositifs domotiques. Réciproquement, le dispositif de traduction peut également être apte à réaliser la traduction inverse. Comme on le verra par la suite, l'invention ne se limite pas au dispositif et au processus de traduction, et permet la communication directe entre équipements à l'aide de trames définies selon l'invention.

Dans un langage de programmation de type textuel, le message formant l'instruction se présente sous la forme d'une chaîne de caractères alphanumériques et/ou de signes lisible et compréhensible par l'homme.

De manière plus conviviale pour le programmeur, le message formant l'instruction peut également être bâti par un choix approprié de pictogrammes, de boutons ou d'icônes présentées de manière contextuelle sur une interface graphique utilisateur (GUI). Chaque choix de pictogramme, de bouton ou d'icône se substitue à l'écriture d'une chaîne de caractères représentative du pictogramme, du bouton ou de l'icône. Le dispositif de traduction est alors apte à convertir directement le choix du pictogramme, du bouton ou de l'icône en élément, dit segment fonctionnel, d'une trame de communication.

Le dispositif de traduction assure ainsi que l'instruction ou le message 21 est transformé en une trame 22, compréhensible par la machine ou inversement. La trame comprend un champ de données, lequel comprend plusieurs segments fonctionnels résultant de l'instruction.

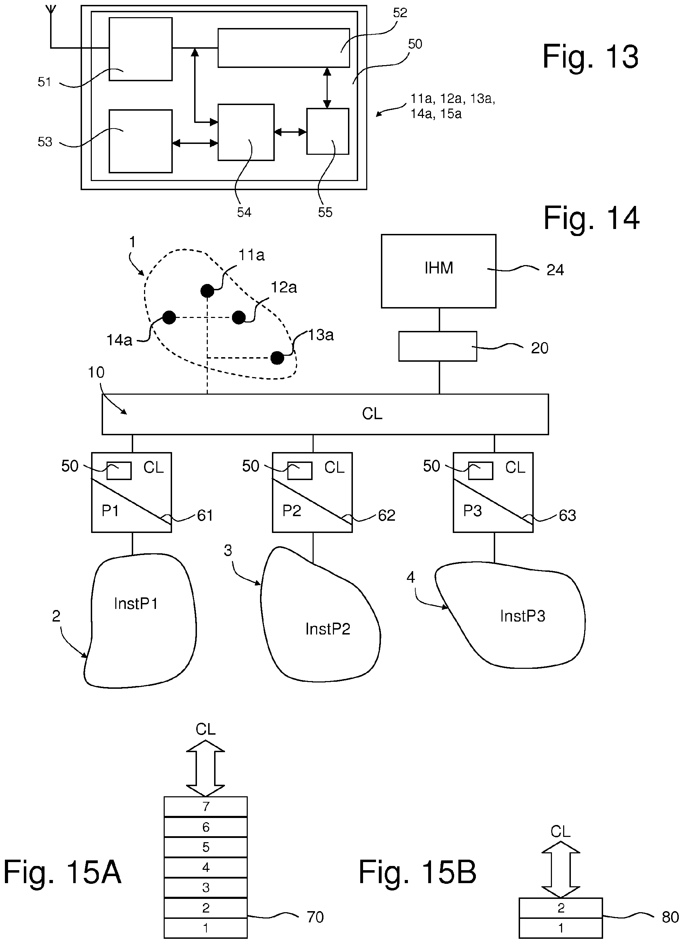

La trame est transformée selon le protocole de communication compréhensible par l'équipement domotique auquel elle est destinée. Il est connu d'ajouter un préambule et des champs de contrôle à la trame, mais il n'en est pas tenu compte ici, et de même pour les possibles opérations de cryptage. Ces points seront précisés en relation avec les figures 15A et 15B.

Selon l'invention, le champ de données de la trame conserve la structure de l'instruction, celle-ci étant sous forme de langage de programmation, constituée de chaînes de caractères alphanumériques et/ou de signes, délimitées par des séparateurs (par exemple des espaces). L'instruction se présente sous la forme de mots composés d'une chaîne de caractères alphanumériques et/ou signes et délimités par des séparateurs. L'instruction est lisible et compréhensible par l'homme, elle correspond donc à un langage de programmation qu'on peut appeler textuel. Chaque chaîne donne naissance à un segment fonctionnel de la trame. Ceci est valable que l'instruction soit de type simple (instruction unique) ou de type multiple (séquence de plusieurs instructions uniques), comme détaillé plus bas.

Alternativement, dans un langage de programmation de type iconique l'instruction résulte d'une pluralité de choix successifs de pictogrammes, boutons ou icônes sur l'interface graphique utilisateur, chacun des choix étant équivalent à l'écriture d'un mot textuel et d'un séparateur, et constituant un segment de l'instruction. Dans ce cas, l'instruction se présente sous la forme de mots composés sous forme d'icônes, une icône se substituant à un mot écrit sous forme d'une chaîne de caractères.

L'instruction peut aussi contenir une partie d'instruction sous forme iconique et une partie d'instruction sous forme textuelle.

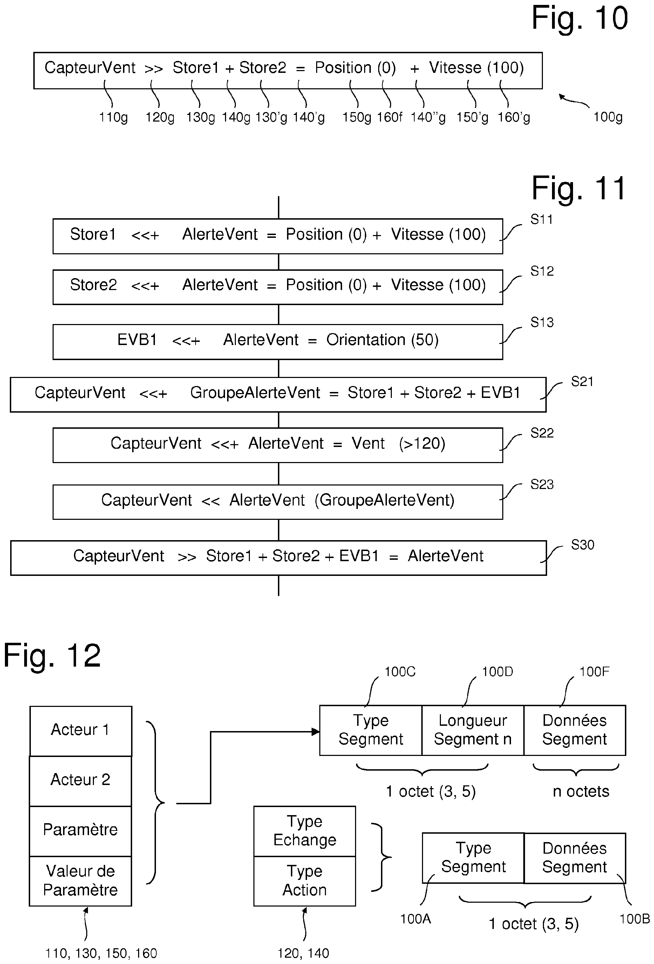

Le dispositif de traduction utilise une bibliothèque de tables de correspondance entre les possibilités offertes par tous les éléments du réseau (équipements, contrôleurs, capteurs, etc.) et leur référence. La traduction de l'instruction textuelle comprenant les chaînes de caractères alphanumériques et/ou de signes se fait alors par le remplacement de chaque segment de l'instruction par son correspondant binaire. Ainsi, le traducteur comprend par exemple une table de types 23a et une table d'identifiants (ID), de paramètres et d'alias, 23b dont l'utilisation sera précisée plus bas, en relation avec la figure 12.

Il en est de même pour chaque segment dans le cas d'une instruction écrite dans un langage de programmation de type iconique ou associant choix iconiques et écriture textuelle.

Quel que soit le sens de traduction, le traducteur 20 respecte la syntaxe ou structure de l'instruction et de la trame correspondante.

Le choix d'une bibliothèque peut ainsi offrir un langage de programmation « multilingue », le choix de la langue (anglais, français, etc.) désirée par l'installateur pour le langage de programmation se faisant par choix d'une bibliothèque adaptée.

La figure 3 représente, la structure du champ de données d'une trame 100 de communication et/ou d'une instruction dans le langage de programmation. Cette structure est la même que l'on considère les éléments avant ou après traduction. Ainsi, les segments fonctionnels de la trame correspondent aux mots de l'instruction dont elle est traduite. Cette notation (mots, segments fonctionnels) est utilisée dans la suite de la description indifféremment pour une trame ou une instruction.

Que ce soit donc en langage de programmation ou sous forme de code machine (binaire), l'instruction et/ou la trame correspondante comprennent au moins :

- Un premier segment fonctionnel d'identification 110 d'un premier acteur Acteur1,
- Un segment fonctionnel de type d'échange 120,

- Un deuxième segment fonctionnel d'identification 130 d'un deuxième acteur Acteur2,
- Un segment fonctionnel de type d'action 140,
- Un segment fonctionnel de paramètre 150,
- Un segment fonctionnel de valeur de paramètre 160.

Comme il sera vu plus loin, les mots ou segments fonctionnels peuvent être répétés plusieurs fois, avec des contenus différents, dans le cas d'instructions complexes. Comme il sera vu ci-dessous, un segment fonctionnel de valeur de paramètre peut aussi contenir une condition logique portant sur le paramètre. Une instruction peut ainsi comprendre autant de mots que souhaités. En particulier, la trame reproduisant l'instruction peut comprendre plus que deux segments fonctionnels identifiant des acteurs, et peut comprendre plus d'un segment fonctionnel de type d'action. Ces différents segments fonctionnels ne sont pas positionnés a priori dans la trame : leur position résulte du contenu de l'instruction.

La figure 4 représente deux types d'échanges, distingués dans l'invention.

Dans un message de type descendant, le premier acteur est un émetteur d'ordres et le deuxième acteur est un récepteur d'ordres. Le segment fonctionnel de type d'échange indique sans ambiguïté le sens de l'échange, depuis l'émetteur d'ordres vers le récepteur d'ordres. Selon l'invention, les acteurs sont préférentiellement identifiés dans le langage de programmation par des chaînes alphanumériques : par exemple, Télécommande2, ThermostatSéjour, VoletRoulant3, alors que le type d'échange est préférentiellement identifié par une chaîne de signes (ou au moins par une sélection des signes particuliers) de la police de caractères accessible sur le clavier d'un outil de programmation. La chaîne de signes comprend un ou plusieurs signes, aussi représentatifs que possible pour le lecteur humain.

Ainsi, le type d'échange correspondant à un message descendant est représenté par les signes >>, tandis que le type d'échange correspondant à un message montant est représenté par les signes <<.

Cependant, la personne écrivant le programme est libre d'inverser la position des acteurs dans son instruction à condition d'inverser également le signe de type d'échange.

L'invention n'oblige pas à toujours considérer un émetteur d'ordres comme premier acteur et un récepteur d'ordres comme deuxième acteur, puisque le type d'échange indique sans ambiguïté les rôles respectifs au cours de l'échange. C'est cependant le mode de réalisation préféré.

Dans le cas d'échanges entre émetteurs d'ordres et s'il existe une relation hiérarchique entre ceux-ci, on utilisera préférentiellement l'émetteur d'ordres de rang hiérarchique plus élevé comme premier acteur.

Il s'agit bien dans les deux cas d'habitudes de programmation laissées à l'appréciation du programmeur. De même, l'invention n'oblige pas à spécifier le type d'échange si une convention est prise dans le langage de programmation : par exemple toujours considérer l'émetteur du message en cours comme premier acteur et le destinataire du message comme deuxième acteur. Cependant, il apparaîtra clairement à la lecture des exemples qui suivent qu'il y a intérêt à permettre cette spécification du type d'échange.

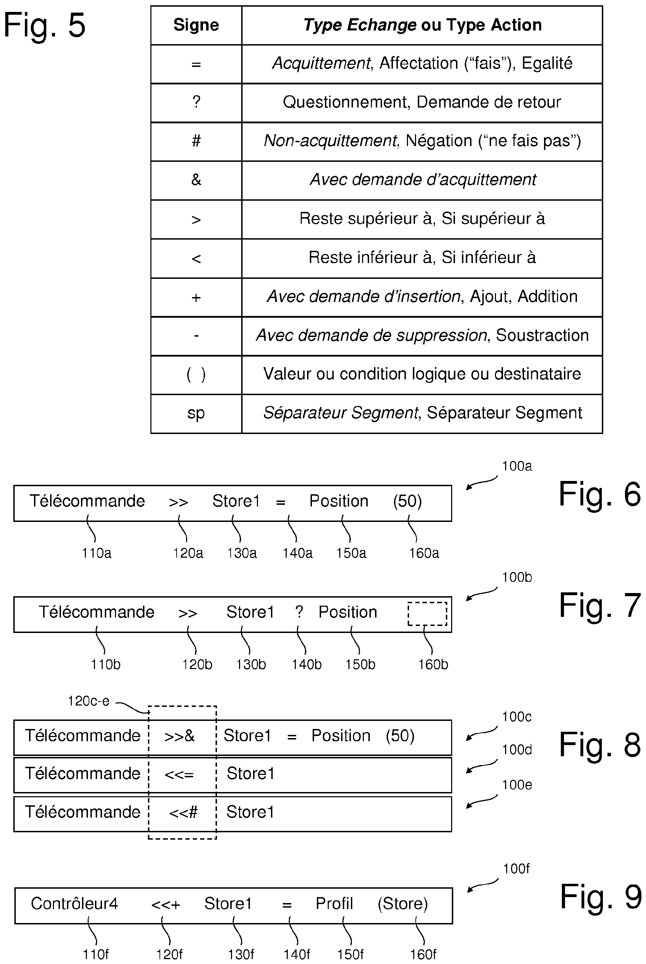

La figure 5 représente une table d'autres signes utilisés dans le langage de programmation et leur signification. Ces signes sont utilisés dans les segments fonctionnels particuliers de type d'échange 120 et de type d'action 140, et constituent à eux seuls ou en association à d'autres signes, le contenu de ces segments fonctionnels particuliers. Certains signes peuvent aussi être utilisés en début de segments fonctionnels de valeurs de paramètre.

Ainsi, le signe « = » a le sens classique d'affectation ou de contrainte d'égalité à respecter s'il est présent dans le segment fonctionnel de type d'action, tandis qu'il a le sens d'acquittement s'il est présent dans le segment fonctionnel de type d'échange. Le signe « = » a le sens de condition logique s'il est placé dans un segment de valeur de paramètre. Inversement, le signe « # » a le sens de « ne fais pas » s'il est présent dans le segment fonctionnel de type d'action alors qu'il a le sens de non-acquittement s'il est présent dans le segment fonctionnel de type d'échange. Il a le signe de « différent de » dans un segment fonctionnel de valeur de paramètre, représentant une condition logique.

Le signe « ? » a le sens de questionnement quand il est présent dans le segment fonctionnel de type d'action.

Le signe « & » a le sens d'une demande d'acquittement quand il est présent dans le segment fonctionnel de type d'échange. L'acquittement positif signifie que le message est bien reçu et sera traité.

Les signes « > » et « < » ont le sens de contrainte d'inégalité à respecter quand ils sont présents dans le segment fonctionnel de type d'action ou le sens de conditions logiques « si plus grand que » ou « si plus petit que » quand ils sont présents dans un segment de valeur de paramètre.

Le signe « + » correspond à une demande d'insertion (ou de concaténation ou d'enchaînement) lorsqu'il est inclus dans le type d'échange, ce qui sera décrit en relation avec la figure 9. Il a le sens classique d'ajout quand il est inclus dans un segment fonctionnel de type d'action, comme il sera décrit en relation avec la figure 10.

Le signe « - » correspond à une demande de suppression lorsqu'il est inclus dans le type d'échange, ce qui sera décrit en relation avec la figure 9.

Le signe ( ) permet d'identifier un segment de valeur de paramètre (ou de condition logique portant sur une valeur de paramètre) contenues à l'intérieur des parenthèses.

Le cas du signe « sp » sera décrit plus bas, en relation avec la figure 12.

La figure 6 représente un premier exemple de trame 100a et/ou d'instruction.
En langage de programmation, l'instruction se lit :

$$\textit{Télécommande} >> \textit{Store1} = \textit{Position (50)}$$

Les espaces séparent les différentes parties de l'instruction.
Les deux acteurs « *Télécommande* » et « *Store1* » sont clairement identifiés par des chaînes alphanumériques. Le message est de type descendant, depuis un émetteur d'ordres « *Télécommande* » vers un récepteur d'ordres « *Store1* ». L'action est une demande de positionnement comprenant une contrainte d'égalité, portant sur le paramètre « *Position* » qui doit prendre la valeur *50* (ou 50%, selon une interprétation fixée par le document Profil du store).
On retrouve cette même structure dans la trame en codage binaire. Bien entendu, « *Télécommande* » et « *Store1* » sont remplacés dans les segments fonctionnels 110a et 130a de la trame par les codes d'adresses correspondant dans l'installation. Cette relation est établie par utilisation de la table des identifiants, paramètres et alias, 23b. De même, les segments de type d'échange 120a, de type d'action 140a et de paramètre 150a prennent dans la trame des codes particuliers en relation biunivoque avec leur contenu en langage de programmation. Cette relation est établie par utilisation de la table de Types 23a.
La figure 7 représente un deuxième exemple de trame 100b et/ou d'instruction.
En langage de programmation, l'instruction se lit :

$$\textit{Télécommande} >> \textit{Store1} ? \textit{Position}$$

Les deux acteurs « *Télécommande* » et « *Store1* » sont les mêmes que précédemment. Le message est de nouveau de type descendant. L'action est une interrogation portant sur le paramètre position.
La valeur de paramètre n'apparaît plus, ni dans l'instruction, ni dans la trame correspondante.
Une réponse à l'envoi de ce message serait par exemple, si *Store1* est dans une position complètement déployée (100%) :

$$\textit{Télécommande} << \textit{Store1} = \textit{Position (100)}$$

La figure 8 représente trois autres exemples de trames et/ou d'instructions relatifs à une même séquence.
Dans un premier cas ou troisième exemple, l'instruction en langage de programmation se lit :

$$\textit{Télécommande} >>\& \textit{Store1} = \textit{Position (50)}$$

Il s'agit donc du même cas que dans la figure 6, mais cette fois le type d'échange s'accompagne d'une demande d'acquittement. Selon que *Store1* accepte ou non de prendre en compte l'ordre de positionnement à 50%, l'acquittement sera positif ou non.
Dans la trame correspondante, le segment type d'échange 120c contient donc un code représentatif de cette demande additionnelle d'acquittement.
Un deuxième cas ou quatrième exemple est celui d'une réponse par acquittement positif :

$$\textit{Télécommande} <<= \textit{Store1}$$

La trame 100d se limite donc aux trois premiers segments fonctionnels. Le deuxième segment fonctionnel 120d contient donc un code représentatif de l'acceptation de l'ordre.
Un troisième cas ou cinquième exemple est celui d'une réponse par acquittement négatif :

$$\textit{Télécommande} <<\# \textit{Store1}$$

La trame 100e se limite de nouveau aux trois premiers segments fonctionnels. Le deuxième segment fonctionnel 120e contient donc un code représentatif du refus de l'ordre. Il est aussi possible d'adjoindre une information indiquant la cause du refus.

La figure 9 représente un sixième exemple de trame et/ou d'instruction.

En langage de programmation, l'instruction se lit :

```
Controleur4 <<+ Store1 = Profil (Store)
```

Il s'agit donc d'un message montant émis par *Store1* qui demande à être ajouté à la liste des identifiants connus de *Controleur4* et de lui affecter le profil générique *Store.*
Le profil générique *Store* indique à un émetteur d'ordres quelles sont les commandes reconnues par le dispositif domotique de type *Store.*

Inversement, une demande de retrait de cette liste s'écrit simplement :

```
Controleur4 <<- Store1
```

Du fait de la signification d'ajout du signe + dans un segment fonctionnel d'action, l'invention permet de combiner plusieurs actions dans un même message, par répétition des deux ou trois derniers segments fonctionnels de la trame. Par exemple, pour un ordre de repliement rapide d'un store suite à une détection de vent :

```
CapteurVent >> Store2 = Position (0) + Vitesse (Rapide)
```

De la même façon, il est possible de répéter plus que deux fois un segment fonctionnel d'acteur au sein de la trame. La figure 10 donne ainsi l'exemple d'une trame 100g combinant plusieurs acteurs destinataires et plusieurs actions à entreprendre.
En langage de programmation, le message s'écrit :

```
CapteurVent >> Store1 + Store2 = Position (0) +

                Vitesse (100)
```

Cette trame 100g comprend donc 3 segments fonctionnels désignant chacun un acteur et 3 segments fonctionnels désignant un type d'action : indiquant une action d'ajout pour deux d'entre eux (+) et une action de contrainte pour le troisième (=).

L'invention facilite aussi l'écriture et l'utilisation d'alias, par exemple, dans un premier temps lors de la configuration en langage de programmation :

```
ContrôleurCentral <<+ Stores = Store1 + Store2
```

Cette instruction ajoute dans la table des identifiants de *ContrôleurCentral* l'alias « Stores » pour représenter les identifiants de *Store1* et *Store2.*

A l'aide du signe -, il est possible d'exclure certains membres d'un groupe représenté par un alias pour l'exécution d'une instruction :

```
Télécommande >> GroupeStores - Store1 = Position (10)
```

signifie par exemple que tous les membres du groupe défini par GroupeStores, à l'exception de Store1, devront se déployer à 10%.

La figure 11 représente à titre d'illustration une séquence de trames et/ou d'instructions relatives à un procédé de détection de vent.

Dans une première étape S11, un alias « *AlerteVent* » est affecté à *Store1,* avec pour action correspondante d'affecter la valeur *0* au paramètre *Position* et la valeur *100* au paramètre *Vitesse,* soit une action de repli à vitesse rapide. Dans une deuxième étape S12, le même message d'affectation est envoyé à *Store2.* Dans une troisième étape S13, l'alias « *AlerteVent* » est aussi affecté à *EVB1,* mais cette fois le contenu est différent puisque la valeur 50 est affectée au paramètre *Orientation. EVB1* est par exemple un store à lames orientables (External Venetian Blind). En cas de vent, une mise à l'horizontale des lames (soit une orientation de 50 %) peut suffire à protéger l'équipement.

Dans une quatrième étape S21, l'alias « *GroupeAlerteVent* » est affecté à un capteur de vent désigné par *CapteurVent* en lui assignant comme valeur *Store1 + Store2 + EVB1.* Un groupe d'actionneurs est ainsi défini dans le capteur de vent.

Dans une cinquième étape S22, une condition d'alerte vent est créée. L'instruction s'écrit (de même que la trame correspondante) :

```
CapteurVent  <<+  AlerteVent  =  Vent  (>120)
```

Dans cette instruction, *Vent* est un attribut du capteur de vent, donc déjà connu de lui (et indiqué dans un profil du capteur de vent). La condition *AlerteVent* est remplie si le paramètre *Vent* (mesuré par le capteur) est supérieur à 120 km/h.

Dans une sixième étape S23, une valeur est affectée à l'alias *AlerteVent.* Dans le cas d'un alias d'événement comme *AlerteVent,* une valeur est un destinataire concerné par l'événement.

L'instruction s'écrit :

```
CapteurVent  <<  AlerteVent  (GroupeAlerteVent)
```

Les six premières étapes sont des étapes de configuration qui se déroulent dans un ordre quelconque et de manière totalement asynchrone, suite à programmation à l'aide d'un superviseur. Si maintenant le vent mesuré dépasse la valeur de 120 km/h, alors il y a émission d'un message par le capteur vent, tel que décrit par la septième étape S30 :

```
CapteurVent  >>  Store1  +  Store2  +  EVB1  =
                 AlerteVent
```

Chacun des équipements *Store1, Store2* et *EVB1* détecte qu'il est destinataire du message, et appliquera l'action de repliement ou d'orientation correspondant à *AlerteVent.*

L'invention permet donc de simplifier grandement la programmation d'instructions, la traduction en trames de communication de longueur variable et l'interprétation des trames ou des instructions.

Les signes utilisés dans la description sont donnés à titre d'exemple non limitatif et peuvent donner lieu à de nombreuses variantes. Pour les raisons évoquées plus bas, il est préféré n'utiliser que des signes dans les segments de type échange ou type action, mais ce n'est pas une obligation. Par exemple, le signe « = » peut être remplacé par la chaîne de caractères « set » lorsqu'il s'agit d'une affectation.

Le signe « espace » (noté « sp » pour représenter « ») est préférentiellement utilisé en séparateur dans le langage de programmation.

L'invention s'applique de même dans le cas de langage de programmation de type iconique. La création d'alias est alors facilitée par des opérations de type « drag & drop » dans lesquelles le programmeur sélectionne par exemple une icône représentative d'un équipement et la fait glisser jusqu'à une icône d'alias pour l'affecter à celle-ci. De la même façon, à des icônes peuvent être affectées des instructions complètes ou pour lesquelles seule une valeur de paramètre doit être complétée.

Dans le cas d'icônes complexes (ou icônes dynamiques) comme décrit par exemple en figures 4 et 5 de la demande de brevet FR 2 939 555, ces icônes représentent des équipements modifiables par une fenêtre de commande comme décrit en figure 6 de ce document. Par exemple, un store vénitien apparaît de manière simplifiée dans la fenêtre de commande, en coupe ou vue de profil, avec un bouton de réglage de déploiement et un bouton de réglage d'orientation. En agissant sur les boutons de commande, on peut fixer un déploiement de 50% et une orientation de 20° et ainsi modifier l'état d'une icône complexe. Sélectionner cette icône complexe est par exemple strictement équivalent à l'écriture textuelle d'une partie d'instruction :

```
StoreVénitien2 = Déploiement (50) + Orientation (20)
```

Une icône complexe est donc équivalente à une suite de plusieurs mots.

Dans tous les cas, que le programme soit d'origine textuelle ou iconique, la trame se compose de segments fonctionnels tels que décrits.

La figure 12 représente un exemple de codage binaire d'une trame à transmettre sur le réseau domotique.

Selon le type des segments fonctionnels, le codage n'est pas le même. Des segments fonctionnels particuliers comme un segment fonctionnel de type d'échange 120 ou de type d'action 140 sont préférentiellement codés sous forme d'un seul octet, alors que des segments fonctionnels d'identification (110, 130), de paramètre (150) ou de valeur de paramètre (160) sont codés selon un nombre variable d'octets.

Un champ de type de segment utilise par exemple 3 bits d'un premier octet. Telle qu'est décrite l'invention, il existe 6 types différents de segments fonctionnels. Le choix de 3 bits dans le premier octet permet de coder chaque type de segment fonctionnel et éventuellement de distinguer ultérieurement deux nouveaux types de segments fonctionnels. Les 5 bits restants permettent de coder : soit des données du segment, s'il s'agit d'un segment fonctionnel particulier, soit une longueur du segment s'il s'agit d'un segment fonctionnel d'identification, de paramètre ou de valeur de paramètre.

Ainsi, un segment fonctionnel particulier spécifiant un type d'échange 120 ou spécifiant un type d'action 140 est codé sous forme d'un premier octet comprenant un premier champ 100A de type de segment (par exemple 010 pour un type d'échange et 011 pour un type d'action) et un deuxième champ 100B de données de segment, qui contient (préférentiellement sur 5 bits) le code des signes ou caractères spécifiant l'échange ou l'action. Il existe donc préférentiellement 32 codes pouvant être différenciés, ce qui permet d'envisager des codes permettant de coder dans le premier octet non seulement des signes (comme décrits aux figures 4 et 5) mais également des associations de signes fréquemment utilisées (comme décrites aux figures 8 et 9). Alternativement, il est possible de répéter le premier octet avec le même premier champ mais avec un deuxième champ différent contenant le code de signes additionnels.

Un segment fonctionnel d'identification d'un premier acteur 110 ou d'identification d'un deuxième acteur 130 ou de spécification d'un paramètre 150 ou d'une valeur de paramètre 160 est codé sous forme d'un deuxième octet incluant un troisième champ 100C codant le type de segment (par exemple respectivement 100, 101, 110 et 111) et un quatrième champ 100D codant la longueur du segment fonctionnel, suivi d'une pluralité n d'octets constituant un cinquième champ 100F contenant les données du segment fonctionnel. La longueur du segment fonctionnel indique par exemple le nombre n d'octets constituant le cinquième champ (par exemple de 1 à 32).

A l'aide d'un tel codage, différents segments fonctionnels peuvent être répétés dans la trame s'il traduisent une instruction de type multiple. De plus, la traduction supporte plusieurs protocoles différents, par exemple pour exprimer un identifiant sous forme d'une adresse : le nombre d'octets d'adresse en général varie d'un protocole à l'autre. Selon l'invention, l'adresse est en effet codée selon un nombre variable d'octets, ce nombre étant spécifié dans la trame.

Alternativement, pour simplifier les algorithmes de traitement des trames, les champs « type segment » et « longueur segment » peuvent être codés chacun sur un octet distinct. On perd inversement sur la taille de la trame. Ces tailles sont modifiables, suivant le réseau mis en place.

De même, les champs « type échange » et « type action » ne sont pas nécessairement des champs spéciaux. Dans ce cas, qui se prête à la plus grande généralité, ils se présentent de la même manière qu'un segment fonctionnel de type acteur ou paramètre avec les trois champs 100C, 100D et 100F.

Un alias peut de même comporter non seulement une longueur variable de caractères en langage de programmation mais aussi un nombre variable d'octets en code binaire.

Tous les signes, ou associations de signes et/ou de caractères alphanumériques (par exemple « = » ou « set ») sont codés en binaire (par exemple sur 5 bits) dans la table de types 23a à l'intérieur de l'outil de traduction. De même, les identifiants ou alias ou paramètres sont codés en binaire dans la table d'identifiants ou alias 23b.

Par exemple :
*TelecommandeChambreEtage1*
est codé :
*1F 23 C0 DC 58 55 00 00*

s'il est convenu qu'un identifiant d'adresse ou un nom de paramètre est uniformément codé sur 64 bits (8 octets), ce qu'indique une valeur 8 du nombre n dans le quatrième champ 100D.

La sélection directe sur un écran d'une icône représentative de la télécommande chambre du 1er étage donnerait ce même codage binaire dans le cas d'un langage de programmation de type iconique, faisant correspondre directement des codes binaires à des icônes ou boutons. Il est strictement équivalent, lors de la programmation, de sélectionner une icône ou d'écrire un mot représentatif de ladite icône.

De même le paramètre :
*TemperatureSalonRdC*
est codé :
*00 00 00 E0 8F 00 24 15.*

La figure 13 représente un dispositif domotique de type émetteur d'ordres 13a, 14a, 15a ou de type récepteur d'ordres 11a, 12a munis de moyens d'analyse de trame aptes à appliquer le procédé de communication selon l'invention.

Un moyen d'analyse de trame 50 comprend un moyen de communication 51 sur le réseau domotique, tel un émetteur-récepteur radiofréquences apte à émettre et à recevoir des trames comprenant un champ de données. Le dispositif comprend une mémoire de trame 52, permettant de stocker au moins une trame, et une pluralité de tables.

Une première table 53 permet de stocker les codes particuliers de segments fonctionnels particuliers.

Quand le message est reçu, les codes particuliers contenus dans la trame sont détectés pour identifier les blocs fonctionnels. A cet effet, le dispositif comprend également un comparateur 54 apte à reconnaître dans le champ de donnée un code particulier de type de segment et à déduire de ce code particulier le type de segment fonctionnel.

La longueur du segment fonctionnel est déduite soit du type de segment, s'il s'agit d'un segment fonctionnel particulier, soit d'un champ indiquant la longueur du segment. Le dispositif comprend une deuxième table de pointeurs 55 dans laquelle sont stockées les positions de début et/ou de fin des différents segments fonctionnels dans la mémoire de trame. Ainsi, le traitement des segments fonctionnels est ensuite réalisé par des moyens de traitement du dispositif, non représentés.

Les différents éléments du dispositif sont des blocs fonctionnels dont certains peuvent être réalisés sous forme logicielle. Avantageusement, un même microcontrôleur contient tous les éléments du dispositif, ainsi que les moyens d'analyse et traitement.

Il n'est pas nécessaire que tous les récepteurs et émetteurs d'ordre de l'installation disposent du dispositif de traduction.

En effet, dans le cas ou le langage décrit dans la présente demande est utilisé à seule fin de programmation et de fonctionnement d'une installation, seuls les dispositifs domotiques disposant d'une interface homme-machine assez évoluée peuvent être équipés du dispositif de traduction. Celui-ci est donc utilisé pour traduire en trames les instructions lisibles fournies par l'installateur ou l'utilisateur ou pour traduire en langage lisible, à l'attention d'un installateur ou d'un utilisateur, les trames fournies par d'autres équipements de l'installation. Ce cas est représenté en figure 1. Tous les dispositifs domotiques sont néanmoins équipés d'un dispositif d'analyse de trame 50 permettant d'analyser une trame selon l'invention pour la traiter et exécuter l'instruction (de type simple ou de type multiple) qu'elle contient. Dans le cas où le langage décrit dans la présente demande est utilisé pour la mise en relation de différentes installations utilisant des protocoles différents, tous les dispositifs domotiques peuvent être équipés d'un dispositif de traduction. Alternativement, seules des passerelles en sont équipées. Ainsi la figure 14 représente un réseau d'installations domotiques. Outre l'installation domotique 1 de la figure 1, le réseau d'installations comprend trois autres installations domotiques 2 ou InstP1, 3 ou InstP2, 4 ou InstP3, dans lesquelles les dispositifs domotiques communiquent entre eux suivant respectivement un protocole P1, P2, P3. Chacune de ces autres installations est reliée à une passerelle de traduction des trames entre le protocole de l'installation et le protocole 10, dit aussi : « langage commun » CL. Une première passerelle 61 assure l'interface entre le langage du protocole P1 et le langage commun CL, une deuxième passerelle 62, l'interface entre P2 et CL et une troisième passerelle entre P3 et CL. Chaque passerelle comprend un dispositif d'analyse de la trame 50.

Pour programmer ou commander un équipement dans une des installations InstP1, InstP2, InstP3, l'installateur ou utilisateur dispose d'une interface Homme-Machine IHM 24, laquelle fonctionne conjointement avec le dispositif de traduction 20 décrit précédemment. Ainsi, l'installateur a la possibilité d'utiliser le langage de programmation très intuitif à base de signes et/ou de caractères alphanumériques lisibles, et/ou d'icônes, tout en communiquant (sous forme d'ordres ou d'informations) avec des équipements d'installations très diverses, via le langage commun dont les trames sont traduites à partir des instructions en langage de programmation.

Par ailleurs, les émetteurs d'ordres ou récepteurs d'ordres d'autres équipements 11a, 12a, 13a, 14a peuvent également être intégrés dans ce réseau d'installations, ceux-ci communiquant directement avec le reste du réseau d'installation en utilisant le langage commun CL.

Alternativement, le langage commun n'est utilisé que pour une communication entre l'interface Homme-Machine et les passerelles de communication, sans qu'aucun équipement ne soit directement commandé à l'aide du langage commun.

Le langage commun CL se caractérise donc par une syntaxe binaire permettant de construire une trame de communication de complexité totalement variable et reflétant fidèlement, segment par segment, une instruction ou un message dont la structure n'est pas définie a priori.

Cette trame peut directement être transmise sur le support physique après ajout d'octets de préambule ou de test de redondance cyclique (CRC). Elle peut aussi être transformée de manière plus ou moins complexe selon le protocole utilisé, et notamment par cryptage.

Ainsi que représenté schématiquement en figure 15A, les trames de communication du langage commun CL peuvent être appliquées ou reçues au niveau de la couche 7 « Application » du modèle de communication normalisé OSI, quand un premier protocole domotique 70 utilise l'ensemble des 7 couches. Au contenu de la trame de communication selon l'invention s'ajoutent alors de nombreuses informations du protocole 70, par exemple d'authentification ou de routage.

Inversement, comme représenté schématiquement en figure 15B, le langage commun CL peut s'appliquer directement à des couches beaucoup plus basses du modèle OSI, par exemple la couche 2 « Liaison » si un deuxième protocole domotique se satisfait de deux couches, la trame de communication selon l'invention étant alors simplement « encapsulée » par un préambule et un checksum.

Le langage commun peut également être désigné par le terme « Métalangage » du fait de son aptitude à permettre la communication entre réseaux ou entre équipements utilisant les protocoles domotiques les plus variés dans un bâtiment, par exemple « Ipv6 », « io-homecontrol* », « Zigbee* », « Z-wave* » etc. (* marques déposées).

## Revendications

1. Dispositif de traduction (50) pour la programmation d'une installation domotique, ladite installation comprenant des émetteurs d'ordres et/ou des récepteurs d'ordres associés à des équipements dans un bâtiment, lesdits émetteurs d'ordres et/ou récepteurs d'ordres communiquant entre eux par l'intermédiaire de trames comprenant un champ de données comprenant plusieurs segments fonctionnels, **caractérisé en ce que** ledit dispositif comprend des moyens pour traduire en une trame (100) une instruction écrite dans un langage de programmation, l'instruction comprenant des mots composés de chaînes de caractères alphanumériques et/ou signes et/ou icônes, la structure de ladite trame traduite correspondant à celle de l'instruction et comportant autant de segments fonctionnels (110-160) que l'instruction comporte de mots et chaque segment fonctionnel comprenant un champ de type de segment.

2. Dispositif de traduction selon la revendication 1, **caractérisé en ce que** le champ de type de segment indique que le segment fonctionnel comprend l'un des éléments suivants :

   - une adresse d'un acteur,
   - une désignation d'un paramètre
   - une valeur de paramètre,
   - un type d'échange,
   - un type d'action.

3. Dispositif de traduction selon l'une des revendications précédentes, **caractérisé en ce qu'**une trame comprend plusieurs segments fonctionnels spécifiant un type d'action.

4. Dispositif de traduction selon l'une des revendications précédentes, **caractérisé en ce qu'**une trame comprend plus que deux segments fonctionnels identifiant des acteurs.

5. Dispositif de traduction selon l'une des revendications précédentes, **caractérisé en ce qu'**un type d'action désigne au moins l'une des actions ou opérations suivantes :

   - une affectation ou une contrainte,
   - une interrogation,
   - une condition logique, basée notamment sur une valeur mesurée d'un paramètre mesurable par un capteur.

6. Dispositif de traduction selon l'une des revendications précédentes, **caractérisé en ce que** la trame comprend un segment fonctionnel spécifiant un type d'échange, le type d'échange indiquant au moins le sens de l'échange entre acteurs et/ou une demande d'acquittement et/ou une réponse à une demande d'acquittement.

7. Dispositif de traduction selon l'une des revendications précédentes, **caractérisé en ce que** chaque segment fonctionnel comprend un champ de longueur de segment permettant de déduire le nombre d'octets contenus dans le segment fonctionnel, à l'exception de segments fonctionnels particuliers dont la longueur est prédéterminée et pouvant spécifier un type d'action ou un type d'échange.

8. Dispositif de traduction selon l'une des revendications 1 à 6, **caractérisé en ce que** chaque segment fonctionnel comprend un champ de longueur de segment permettant de déduire le nombre d'octets contenus dans le segment fonctionnel.

9. Dispositif de traduction selon l'une des revendications précédentes, **caractérisé en ce qu'**un type d'action désigne une action d'ajout et/ou une action de retrait d'acteurs à un groupe d'acteurs.

10. Dispositif de traduction selon l'une des revendications précédentes, **caractérisé en ce qu'**un type d'action désigne une action d'ajout de nouveaux segments fonctionnels à la trame.

11. Dispositif de traduction selon l'une des revendications précédentes, **caractérisé en ce que** la trame comprend un préambule et un champ de contrôle.


**Patentansprüche**

1. Übersetzungsvorrichtung (50) für die Programmierung einer Haushaltstechnik-Anlage, wobei die Anlage Sender von Befehlen und/oder Empfänger von Befehlen umfasst, die mit Ausrüstungen in einem Gebäude assoziiert sind, wobei die Sender von Befehlen und/oder die Empfänger von Befehlen untereinander mit Hilfe von Rastern kommunizieren, die ein Datenfeld umfassen, das mehrere funktionelle Segmente umfasst, **dadurch gekennzeichnet, dass** die Vorrichtung Mittel umfasst, um in einem Raster (100) eine Anweisung zu übersetzen, die in einer Programmiersprache geschrieben ist, wobei die Anweisung Wörter, zusammengesetzt aus alphanumerischen Charakteren, und/oder Zeichen und/oder Ikonen umfasst, wobei die Struktur des übersetzten Rasters derjenigen der Anweisung entspricht und ebenso viele funktionelle Segmente (110 - 160) umfasst, wie die Anweisung Wörter umfasst, und jedes funktionelle Segment ein Feld vom Typ Segment.

2. Übersetzungsvorrichtung nach Anspruch 1, **dadurch gekennzeichnet, dass** das Feld vom Typ Segment anzeigt, dass das funktionelle Segment eines der folgenden Elemente umfasst:

   - eine Adresse eines Akteurs,
   - eine Bezeichnung eines Parameters,
   - einen Parameterwert,
   - einen Austauschtyp
   - einen Aktionstyp.

3. Übersetzungsvorrichtung nach einem der vorhergehenden Ansprüche, **dadurch gekennzeichnet, dass** ein Raster mehrere funktionellen Segmente umfasst, die einen Aktionstypen spezifizieren.

4. Übersetzungsvorrichtung nach einem der vorhergehenden Ansprüche, **dadurch gekennzeichnet, dass** ein Raster mehr als zwei funktionelle Segmente umfasst, die Akteure identifizieren.

5. Übersetzungsvorrichtung nach einem der vorhergehenden Ansprüche, **dadurch gekennzeichnet, dass** ein Aktionstyp mindestens eine der folgenden Aktionen oder Operationen bezeichnet:

   - eine Zuweisung oder eine Beschränkung,
   - eine Frage,
   - eine logische Bedingung, insbesondere basierend auf einem gemessenen Wert, eines messbaren Parameters durch einen Sensor.

6. Übersetzungsvorrichtung nach einem der vorhergehenden Ansprüche, **dadurch gekennzeichnet, dass** das Raster ein funktionelles Segment umfasst, das einen Austauschtyp spezifiziert, wobei der Austauschtyp mindestens die Richtung des Austauschs zwischen den Akteuren und/oder einer Anfrage zur Freigabe und/oder eine Antwort zur Freigabe anzeigt.

7. Übersetzungsvorrichtung nach einem der vorhergehenden Ansprüche, **dadurch gekennzeichnet, dass** jedes funktionelle Segment ein Feld mit einer Segmentlänge umfasst, die ermöglicht, die Anzahl von Oktetten zu deduzieren, die in dem funktionellen Segment enthalten ist, mit Ausnahme von besonderen funktionellen Segmenten, deren Länge vorbestimmt ist und einen Aktionstyp oder einen Austauschtyp spezifizieren kann.

8. Übersetzungsvorrichtung nach einem der Ansprüche 1 bis 6, **dadurch gekennzeichnet, dass** jedes funktionelle Segment ein Feld mit einer Segmentlänge umfasst, die ermöglicht, die Anzahl von Oktetten zu deduzieren, die in dem funktionellen Segment enthalten ist.

9. Übersetzungsvorrichtung nach einem der vorhergehenden Ansprüche, **dadurch gekennzeichnet, dass** ein Aktionstyp eine Aktion des Hinzufügens und/oder eine Aktions des Entfernens von Akteuren zu einer Gruppe von Akteuren bezeichnet.

10. Übersetzungsvorrichtung nach einem der vorhergehenden Ansprüche, **dadurch gekennzeichnet, dass** ein Aktionstyp eine Aktion des Hinzufügens von neuen funktionellen Segmenten zum Raster bezeichnet.

11. Übersetzungsvorrichtung nach einem der vorhergehenden Ansprüche, **dadurch gekennzeichnet, dass** das Raster eine Vorstufe und ein Steuerfeld umfasst.

**Claims**

1. A translation device (50) for the programming of a home-automation installation, said installation comprising command transmitters and/or command receivers associated with items of equipment in a building, said command transmitters and/or command receivers communicating with one another by means of frames comprising a data field comprising several functional segments, **characterized in that** said device comprises means for translating into a frame (100) an instruction written in a programming language, the instruction comprising words consisting of strings of alphanumeric characters and/or signs and/or icons, the structure of said translated frame corresponding to that of the instruction and comprising the same number of functional segments (110-160) as the instruction comprises words and each functional segment comprising a field of segment type.

2. The translation device as claimed in claim 1, **characterized in that** the field of segment type indicates that the functional segment comprises one of the following elements:

   - an address of an actor,
   - a designation of a parameter,
   - a parameter value,
   - a type of transaction,
   - a type of action.

3. The translation device method as claimed in one of the preceding claims, **characterized in that** a frame comprises several functional segments specifying a type of action.

4. The translation device as claimed in one of the preceding claims, **characterized in that** a frame comprises more than two functional segments identifying actors.

5. The translation device as claimed in one of the preceding claims, **characterized in that** a type of action designates at least one of the following actions or operations:

   - an assignment or an imposition,
   - an interrogation,
   - a logic condition, based in particular on a measured value of a parameter that can be measured by a sensor.

6. The translation device as claimed in one of the preceding claims, **characterized in that** the frame comprises a functional segment specifying a type of transaction, the type of transaction indicating at least the direction of the transaction between actors and/or an acknowledgement request and/or a response to an acknowledgement request.

7. The translation device as claimed in one of the preceding claims, **characterized in that** each functional segment comprises a segment length field making it possible to deduce the number of bytes contained in the functional segment, except for particular functional segments whose length is predetermined and that may specify a type of action or a type of transaction.

8. The translation device as claimed in one of the claims 1 to 6, **characterized in that** each functional segment comprises a segment length field making it possible to deduce the number of bytes contained in the functional segment.

9. The translation device as claimed in one of the preceding claims, **characterized in that** a type of action designates an action of adding and/or an action of subtracting actors to and/or from a group of actors.

10. The translation device as claimed in one of the preceding claims, **characterized in that** a type of action designates an action of adding new functional segments to the frame.

11. The translation device as claimed in one of the preceding claims, **characterized in that** the frame comprises a preamble and a control field.

## Fig. 1

## Fig. 2

| | | |
|---|---|---|
| Message en langage programme (21) | Traducteur (20) | Trame de communication (22) |
| | Table Types (23a) | |
| | Table ID & Alias (23b) | |

## Fig. 3

| Acteur 1 (110) | Type Echange (120) | Acteur 2 (130) | Type Action (140) | Paramètre (150) | Valeur de Paramètre (160) |
|---|---|---|---|---|---|

100

## Fig. 4

| Message Descendant | | Message Montant | |
|---|---|---|---|
| Acteur 1 | Emetteur d'ordres | Acteur 1 | Récepteur d'ordres |
| Acteur 2 | Récepteur d'ordres | Acteur 2 | Emetteur d'ordres |
| Signe | >> | Signe | << |

## Fig. 5

| Signe | *Type Echange* ou Type Action |
|---|---|
| = | *Acquittement,* Affectation ("fais"), Egalité |
| ? | Questionnement, Demande de retour |
| # | *Non-acquittement,* Négation ("ne fais pas") |
| & | *Avec demande d'acquittement* |
| > | Reste supérieur à, Si supérieur à |
| < | Reste inférieur à, Si inférieur à |
| + | *Avec demande d'insertion,* Ajout, Addition |
| - | *Avec demande de suppression,* Soustraction |
| ( ) | Valeur ou condition logique ou destinataire |
| sp | *Séparateur Segment,* Séparateur Segment |

100a

| Télécommande | >> | Store1 | = | Position | (50) |

110a   120a   130a   140a   150a   160a

## Fig. 6

100b

| Télécommande | >> | Store1 | ? Position | |

110b   120b   130b   140b   150b   160b

## Fig. 7

120c-e

| Télécommande | >>& | Store1 = Position (50) |
| Télécommande | <<= | Store1 |
| Télécommande | <<# | Store1 |

100c
100d
100e

## Fig. 8

100f

| Contrôleur4 | <<+ | Store1 | = | Profil | (Store) |

110f   120f   130f   140f   150f   160f

## Fig. 9

# Fig. 10

CapteurVent >> Store1 + Store2 = Position (0) + Vitesse (100)

110g  120g  130g  140g  130'g  140'g  150g  160f  140''g  150'g  160'g

100g

# Fig. 11

| Store1  <<+  AlerteVent = Position (0) + Vitesse (100) | S11 |

| Store2  <<+  AlerteVent = Position (0) + Vitesse (100) | S12 |

| EVB1  <<+  AlerteVent = Orientation (50) | S13 |

| CapteurVent  <<+  GroupeAlerteVent = Store1 + Store2 + EVB1 | S21 |

| CapteurVent <<+ AlerteVent = Vent  (>120) | S22 |

| CapteurVent << AlerteVent (GroupeAlerteVent) | S23 |

| CapteurVent  >>  Store1 + Store2 + EVB1 = AlerteVent | S30 |

# Fig. 12

| Acteur 1 |
| Acteur 2 |
| Paramètre |
| Valeur de Paramètre |

110, 130, 150, 160

| Type Echange |
| Type Action |

120, 140

| 100C | 100D | 100F |
|---|---|---|
| Type Segment | Longueur Segment n | Données Segment |

1 octet (3, 5)    n octets

| Type Segment | Données Segment |

100A    1 octet (3, 5)    100B

Fig. 13

Fig. 14

Fig. 15A

Fig. 15B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0178307 A
- US 7304950 B

- FR 2939555